# EUROPÄISCHE PATENTANMELDUNG

(11) **EP 1 257 120 A2**
(43) Veröffentlichungstag der Anmeldung: **13.11.2002**
(21) Anmeldenummer: 02100460.1
(22) Anmeldetag: 08.05.2002
(51) Int. Cl.: H04N 5/445, H04N 7/173, H04N 7/16

(54) **Anzeige weiterführender Informationen zu in einem Multimediagerät vorkommenden Informationselementen**

(30) Priorität: 10.05.2001 DE 10122597
(71) Anmelder: Philips Corporate Intellectual Property GmbH, 20099 Hamburg (DE); Koninklijke Philips Electronics N.V., 5621 BA Eindhoven (NL)
(72) Erfinder: Baumeister, Markus, 52066, Aachen (DE); Baldus, Heribert, 52066, Aachen (DE); Montvay, Andras, 52066, Aachen (DE)
(74) Vertreter: Volmer, Georg, Dipl.-Ing.

(57) **Zusammenfassung**

Die Erfindung bezieht sich auf ein Multimedia-Gerät, das wenigsten einen Informationselement in einem vom Multimedia-Gerät verarbeiteten Audio- und/oder Videodatenstrom erkennt, die erkannten Informationselemente in Abhängigkeit von einer aus Auftrittszeitpunkt eines Informationselementes und wenigstens einem Selektionskriterium bestehender Gewichtung abspeichert und weiterführender Informationen zu dem durch einen Benutzer ausgewähltem Informationselement auf einer Ausgabeeinheit des Multimedia-Gerätes darstellt.

## Beschreibung

Anzeige weiterführender Informationen zu in einem Multimediagerät vorkommenden Informationselementen

Die Erfindung bezieht sich auf ein Verfahren, das einem Benutzer eines Multimedia-Gerätes ermöglicht, weitere Informationen zu in einem Audio- und/oder Videodatenstrom vorkommenden ihm unbekannten Informationselementen zu erhalten.

Die US 5 973 685 Patentschrift beschreibt ein Verfahren zur Übertragung von Zusatzinformationen oder Verweisen, die einem Benutzer eines digitalen Übertragungsmediums präsentiert werden. Die zusätzlichen Informationen und Verweise werden zusammen mit den Nutzdaten innerhalb des Datenstroms übertragen. Das Verfahren stellt Mittel zur Einbettung von zusätzlichen Informationen in Audio-/Videodatenströme in Form von Rahmen vor, somit werden die Informationen rahmenbezogen übertragen. Der Benutzer kann eine Auswahl aus Informationen treffen, die aus dem Datenstrom durch das Demultiplexen entnommen werden, so dass kein zusätzlicher Kanal für die Informationen übertragen werden muss Die zusätzlichen Informationen können aus Verweisen bestehen, die auf aus separaten Kanälen gesendete Informationen verweisen.

Der Erfindung liegt die Aufgabe zugrunde, dem Benutzer eine breite Informationsbasis zu den durch das Multimedia-Gerät empfangenen Nachrichten zu bieten.

Die Aufgabe wird durch ein Multimedia-Gerät der eingangs genannten dadurch gelöst, dass
- wenigsten ein Informationselement in einem vom Multimedia-Gerät verarbeiteten Audio- und/oder Videodatenstrom erkannt wird,
- die erkannten Informationselemente in Abhängigkeit von einer aus Auftrittszeitpunkt eines Informationselementes und wenigstens einem Selektionskriterium bestehender Gewichtung abgespeichert wird,
- weiterführende Informationen zu dem durch einen Benutzer ausgewählten Informationselement auf einer Ausgabeeinheit des Multimedia-Gerätes dargestellt werden.

Einem Benutzer eines Multimedia-Gerätes wird die Möglichkeit gegeben, zusätzliche Informationen zu den Inhalten einer Fernsehsendung, Video- oder Audio-Wiedergabe zu erhalten. Eine Erkennung mehrerer vorkommender Informationselemente kann durch ein bereits bekanntes Verfahren wie das Closed Caption in den USA und Videotext-Untertitel in Europa erfolgen. und /oder durch Spracherkennung, d.h. Verfahren zur automatischen Erkennung von Wörtern in gesprochenen Sätzen oder einzeln gesprochenen Wörtern, ergänzt werden. Ein Informationselement besteht aus einer gedanklichen Einheit, die den Sinngehalt (eine Zusammenfassung der wesentlichen Merkmale von etwas) wiedergibt. Eine sinngemäße Abkürzung, ein oder mehrere Worte können ein Informationselement sein. Die während einer Sendung im Bild innerhalb eines Laufbandes oder Bildunterschrift erscheinen Informationselemente werden durch das auf dieses Bild angewandte optische Zeichenerkennungsverfahren (OCR) erfasst und festgehalten.

Die erkannten, in einer Fernsehsendung aus einer zurückliegenden Zeitspanne genannten und als selten bewerteten Informationselemente werden in einer Liste abgespeichert. Die Informationselemente der Liste sind nach einem Selektionskriterium wie z.B. Auftrittswahrscheinlichkeit (Seltenheit) und in Abhängigkeit vom Zeitpunkt der Nennung (Auftrittszeitpunkt) sortiert, so dass der Benutzer die für ihn interessanten Informationselemente selektieren kann.

Durch eine Eingabe am Multimedia-Gerät kann der Benutzer sich anhand der auf dem Bildschirm des Multimedia-Gerätes angezeigten, nach dem FIFO-(First In First Out)-Prinzip arbeitenden Liste von Informationselementen weiterführend informieren bzw. die Informationselemente der Liste werden näher erläutert. Die geordnete Liste wird dem Benutzer präsentiert, dabei werden nach einer aus Auftrittszeitpunkt und Auftrittswahrscheinlichkeit bestehender Gewichtung die Informationselemente in die Liste sortiert. Der Benutzer kann ein Grenzwert der Auftrittswahrscheinlichkeit der Informationselemente im Datenstrom angeben, ab der die Informationselemente mit einer geringeren Auftrittswahrscheinlichkeit festgehalten und in der Liste präsentiert werden.

Nach der Wahl des Informationselementes, zu dem der Benutzer zusätzliche Informationen wünscht, erscheinen die zusätzliche Informationen auf dem Bildschirm des Multimedia-Gerätes. Somit hat der Benutzer die Möglichkeit des Nachfragens zu seinen spezifischen Unklarheiten und erhält Auskunft auf seine individuellen Fragen. Die Informationen einer Webseite, eines Lexikon-Eintrags, eines kurzen Videos oder einer Videotext-Seite werden in Form von PiP (Progam in Program) oder durch Pausieren der Fernsehsendung auf dem Bildschirm erscheinen.

Nach der Erkennung der Informationselemente werden die vorkommenden Informationselemente aufgrund der vorhandenen Sprachinformation aus dem Inhalt der Sendung gefiltert und aus den Informationselementen wird eine erste Liste generiert. Dabei wird die Auftrittswahrscheinlichkeit der Informationselemente festgehalten und lediglich die Informationselemente aus der Sprachinformation entfernt, deren Auftrittswahrscheinlichkeit einen zuvor bestimmten Grenzwert nicht erreicht. Der Grenzwert der Auftrittswahrscheinlichkeit kann von dem Benutzer selbst festgesetzt werden.

Eine zweite Liste mit Informationselementen, zu denen eine Informationsquelle Informationen anbieten kann wird erstellt und mit der ersten Liste abgeglichen. Informationselemente, für die keine der Informationsquellen des Multimedia-Gerätes eine weiterführenden Informationen anbieten kann, werden ebenfalls aus der Sprachinformation erkannt (gefiltert) und verworfen.

Der Benutzer wählt das Informationselement zu dem weiterführende Informationen gewünscht werden. Falls das Multimedia-Gerät keine Informationen in einer als erste gewählten Informationsquelle findet, kann auf weitere Informationsquellen zugegriffen werden.

Falls das Multimedia-Gerät ein Gerät eines digitalen Hausnetzwerks ist, kann auch ein beliebiges mit ausreichender Speicherkapazität ausgestattetes Gerät eine zB. nächtlich erstellte Liste speichern. Um Kommunikationskosten und -aufwand zu reduzieren, kann auf das Durchsuchen der zugänglichen Quellen im Internet verzichtet werden und statt dessen eine besonders strenge Filterung der Informationselemente nach den Seltenheit/Selektionskriterium durchgeführt werden, was eine ausreichend umfangreiche Informationselementesammlung auf einem Medienspeicher wie CD/DVD voraussetzt. Die aktuellen Informationen werden dann nach einer gestarteten Abfrage des Benutzers durch eine Suchmaschine im Internet als Ergebnisse der Suchmaschine zur Verfügung stehen.

In Abhängigkeit der Informationsquelle werden die weiterführenden Informationen auf unterschiedlichen Wegen zusammen getragen. Informationsquellen des Multimedia-Gerätes können Speichermedien wie digitale Versatile Disks (DVD), eine Compact Disk (CD), das Internet, und weitere Mittel sein. Die Informationen werden von Speichermedien wie DVD, CD, einer durch zur Verfügung gestellte Daten eines Internetprovider aktualisierten Datenbasis oder zugänglichen Quellen des Internet durchsucht und geladen. Die Aktualisierung der Daten kann zu einem Zeitpunkten statt finden, an dem der Benutzer nicht aktiv das Multimedia-Gerät nutzt.

Die Darstellung der zum gewählten Informationselement vorhandenen Informationen ist abhängig von der Quelle der Informationen. Falls die weiterführenden Informationen aus Filmausschnitten eines Videoabrufdienstes oder einer Digitalen Versatile Disk (DVD) bestehen, werden die Informationen in einer Programm im Programm (PiP) Bildschirmdarstellung des Multimedia-Gerätes dargestellt. Eine Suchmaschine des Internets erschein im Falle, dass die Informationen als Erläuterungen aus einer externen Webseite stammen.

Dem Benutzer des Multimedia-Gerätes wird die Möglichkeit gegeben sich gezielt nach seinen Wünschen zu informieren. Die Informationen finden nur auf Anforderung des Benutzers statt. Das System kann angepasst an den Wissensstand des Benutzers Informationen anbieten, indem die entsprechenden Informationsquellen angesprochen werden, so dass eine Verbesserung der Anpassungsfähigkeit erzielt werden kann. Da die weiterführenden Informationen nicht in den gesendeten Audio/-Videodatenströmen eines Senders übertragen werden, ist eine Kooperation mit dem Anbieter der gesendeten Daten nicht notwendig Durch die Nutzung des Internets als Informationsquelle sind besonders aktuelle Informationen verfügbar. Um die weiterführenden Informationen anzufordern, braucht der Benutzer die genau Schreibweise des Informationselementes nicht kennen, da das Informationselement in der sortierten liste auf dem Bildschirm des Multimedia-Gerätes erscheint.

Die Erfindung bezieht sich auf ein Verfahren zur Darstellung weiterführender Informationen zu wenigstens einem Informationselement in einem vom Multimedia-Gerät verarbeiteten Audio- und/oder Videodatenstrom. Bei dem Verfahren erkannte Informationselemente werden in Abhängigkeit von einer aus Auftrittszeitpunkt des Informationselementes und Selektionskriterium bestehender Gewichtung abgespeichert, und weiterführende Informationen zu dem durch einen Benutzer ausgewählten informationselement auf einer Ausgabeeinheit des Multimedia-Gerätes präsentiert.

Ein Ausführungsbeispiel der Erfindung wird nachstehend anhand der Figur näher erläutert. Es zeigt:
Fig. 1 Multimedia-Gerät während eines Zugriffs auf eine Informationsquelle
Fig. 2 Flussdiagram während eines Zugriffs auf eine Informationsquelle

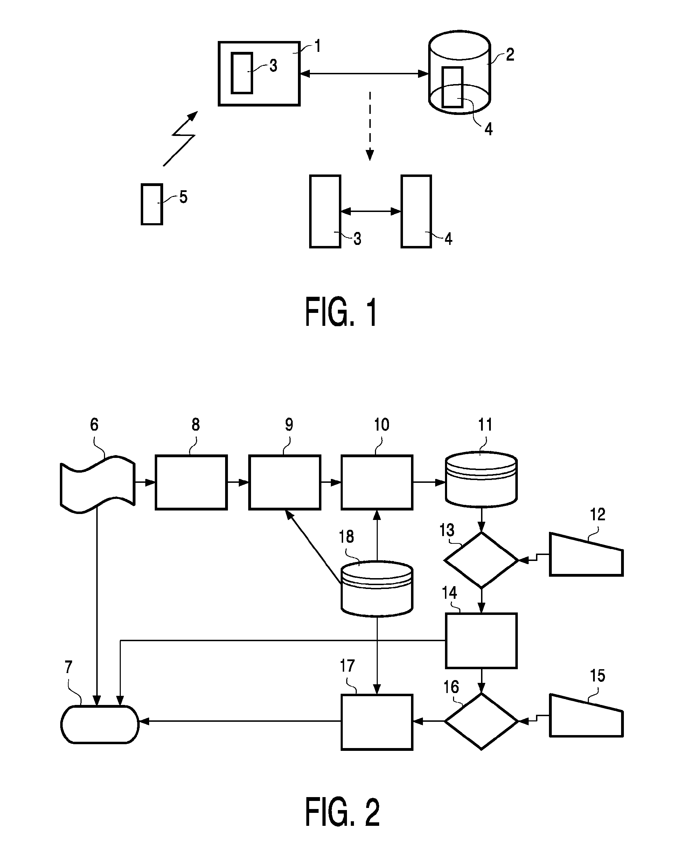

Ein in Fig 1 dargestelltes Multimedia-Gerät 1 ist ein Gerät eines digitalen Hausnetzwerks und ist zusammen mit anderen Geräten in das Hausnetzwerks eingebunden. Das Multimedia-Gerät 1 ist durch eine Fernbedienung 5, Sprachkommandos oder andere Eingabemechanismen kontrollierbar. Ein Speichermedium (z.B. ein digitale Versatile Disk (DVD) Wiedergabegerät) dient dem Multimedia-Gerät als eine Informationsquelle 2. Eine durch das Multimedia-Gerät 1 erstellte Liste 3 beinhaltet die in einem Audio- und/oder Videodatenstrom vorkommende Begriffe als Informationselemente. Der Audio- und/oder Videodatenstrom wird durch das Multimedia-Gerät verarbeiteten und gibt den Inhalt wieder, zu dem der Benutzer weiterführende Informationen wünscht. Eine zweite Liste 4 mit Begriffen, zu denen weiterführende Informationen auf dem Speichermedium 2 verfügbar sind, kann von diesem abgerufen werden.

Ein Benutzer des Hausnetzwerks sieht auf einem Bildschirm, des Multimedia-Gerätes 1 eine Fernsehsendung (Audio- und Videodatenstrom) und möchte über das während der Sendung erwähnte Land weiterführende Informationen erhalten.

Die erste Liste 3 enthält Begriffe, die aus dem Audiodatenstrom der Sendung (zB. "Kameltreiber"), dem Videodatenstrom (zB. "Algier") und einem Untertitelstrom (z.B. "CousCous") in der letzten Zeit extrahiert wurden. Sie wird mit der zweiten Liste 4, die aus Begriffen besteht, zu denen weiterführende Informationen auf der Digitalen Versatile Disk des DVD Wiedergabegeräts 2 verfügbar sind, abgeglichen und dem Benutzer bei Anfrage präsentiert. Durch das Betätigen einer Taste der Fernbedienung 5 erscheint eine Liste 6 mit in der Sendung vorgekommenen Begriffen gewichtet nach einem Selektionskriterium des Benutzers. Aus dieser Liste wählt der Benutzer den ihn interessierenden Begriff (zB. "CousCous"). Daraufhin ruft das Multimedia-Gerät 1 die zu diesem Begriff auf der Digitalen Versatile Disk des DVD Wiedergabegerätes gespeicherten Informationen ab. Die weiterführenden Informationen (etwa Rezept und Tradition) werden dem Benutzer auf dem Bildschirm des Multimedia-Gerätes in Form eines Programm in Programm (PiP) präsentiert.

Im folgenden werden die während des zuvor beschriebenen Szenarios verarbeiteten Programmteile eines für Kontroll- und Managementfunktionen zuständigen Controller anhand eines Flussdiagrams in Fig 2 aufgeführt und erläutert. Im einzelnen besteht das Flussdiagram aus einen Eingangsstrom 6, einen Bildschirm 7, einer Anfragen 12 und einer Eingabe 15 und einem Erläuterungsspeicher 18, sowie den folgenden innerhalb des Controllers realisierten Verarbeitungsschritten: einen Erkenner 8, einen Vorfilter 9, einen Begriffsfilter 10, eine Begriffsliste 11, zwei Abfragen 13 und 16, einer Begriffsauswahl-Generierung 14, und eine Erläuterungsanzeige 17.

### Erkennung und Filterung der im Datenstrom vorkommenden Begriffe:

Der Audio- und Video-Eingangsstrom 6 wird nicht nur auf dem Bildschirm 7 dargestellt sondern auch in den Erkenner 8 geleitet, der nach verschiedenen Mechanismen Begriffe aus dem Eingangsstrom 6 extrahiert (z.B. durch OCR auf im Bild auftauchenden Schriftzügen, durch Spracherkennung auf das Audiosignal oder durch einfache Verarbeitung der Videotext-Untertitel). Die Ausgabe des Erkenners 8 sind sämtliche auf diese Weise erkannten Begriffe. Um die weitere Verarbeitung zu vereinfachen wird im Vorfilter 9 der hieraus resultierende Begriffsstrom reduziert, indem aufgrund lokal im Controller vorhandener Information Begriffe aussortiert werden, die mit hoher Wahrscheinlichkeit für den Benutzer nicht interessant sind. Im einfachsten Fall wird es sich hierbei um eine "Stop-Wort"-Liste handeln, die in der entsprechenden Sprache häufig vorkommende Begriffe (z.B. "und", "oder", "der", "die", "das", ...) enthält.

Ein aus dem Datenstrom erkannter Begriff (word) wird mit den in der Wortliste enthaltenen Begriffen verglichen. Falls der Begriff nicht in der Wortliste vorhanden ist, wird der Begriff durch ein folgendes Programmteil wiedergegeben.

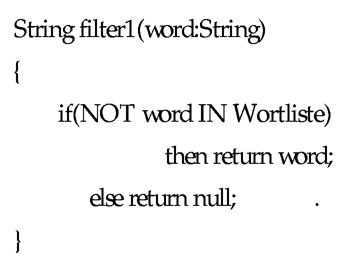

Im Begriffsfilter 10 werden aus dem resultierenden Begriffsstrom alle Begriffe aussortiert, zu denen der Begriffsspeicher (in diesem Beispiel also die DVD) keine weiterführende Information enthält. Hierzu ist ein Zugriff auf zum Controller externe Information (etwa einen auf der DVD vorhandenen Index) notwendig. Der folgende Programmteil gibt nur diejenigen Begriffe zurück, zu denen weiterführende Information vorhanden ist.

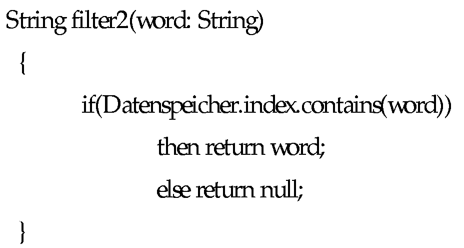

Der Begriffsfilter 10 kann mehrere Datenspeicher auf Information zu dem Begriff testen, wobei Begriffdatenbanken nicht notwendigerweise statisch sein müssen, sondern auch durch andere Programme, dynamisch generiert werden können.

Eine Anpassung an den Wissensstand des Benutzers kann an dieser Stelle des Programms realisiert werden, indem ein Grenzwert (Schnittlevel) der Auftrittswahrscheinlichkeit (Häufigkeit) des Begriffes angegeben wird. Für Auftrittswahrscheinlichkeiten die höher sind als der angegebene Grenzwert, ist der zugehörige Begriff für den Benutzer uninteressant und wird deshalb von dem Programmteil nicht wiedergegeben.

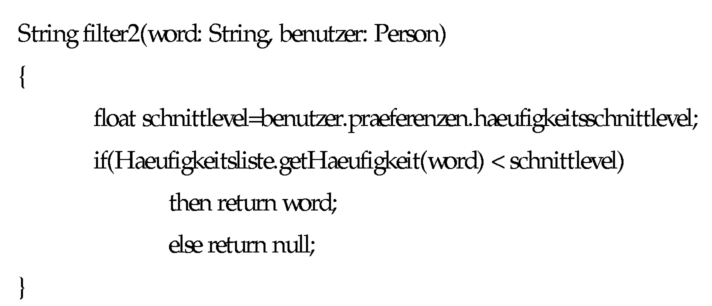

Eine Häufigkeitsliste wird sich hierbei (im Gegensatz zum Vorfilter) wegen ihres Umfangs im Erlaeuterungsspeicher 18 befinden.

### Speicherung der relevanten Begriffe

Die durch Vorfilter 9 und Begriffsfilter 10 nicht aussortierten Begriffe (word) werden in einer Begriffsliste 11 abgelegt. Die erstellte Liste arbeitet nach dem FIFO (First In First Out) -Prinzip, sodaß immer nur die in der letzten Zeit vorgekommenen Begriffe enthalten sind. Der folgende Programmteil legt einen Begriff zusammen mit seinem Auftrittszeitpunkt in einer entsprechenden globalen Liste ab.

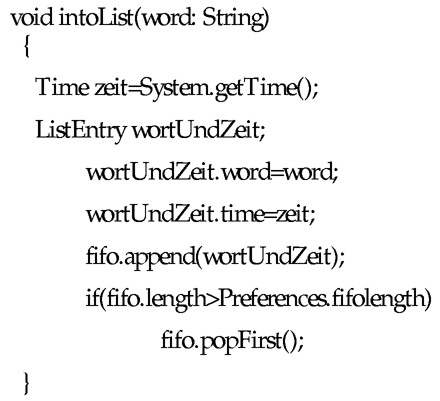

Bei der Anfrage 12 des Benutzers (etwa durch Betätigung einer Fernbedingungstaste) wird die Abfrage 13 positiv beantwortet, deshalb wird durch die Begriffsauswahl-Generierung 14 aus der nach dem FIFO-Prinzip in einem Programmteil intoList erstellten Liste eine sinnvoll geordnete Liste für den Benutzer erzeugt. Um einen hohen Nutzen zu erzielen, wird hierbei nicht einfach eine nach Auftrittszeitpunkt geordnete Liste präsentiert, sondern die Ordnung wird zusätzlich durch ein Selektionskriterium beeinflusst.

Im folgenden Programmteil entspricht das Selektionskriterium einer Auftrittshäufigkeit des Begriffes. Hierbei gibt die Variable N die Länge der anzuzeigenden Liste und W1 bzw. W2 eine aus Auftrittszeitpunkt und Auftrittshäufigkeit bestehende Gewichtung des Begriffes.

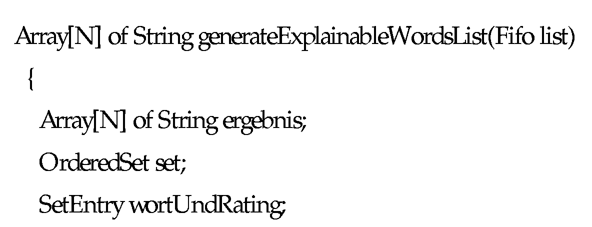

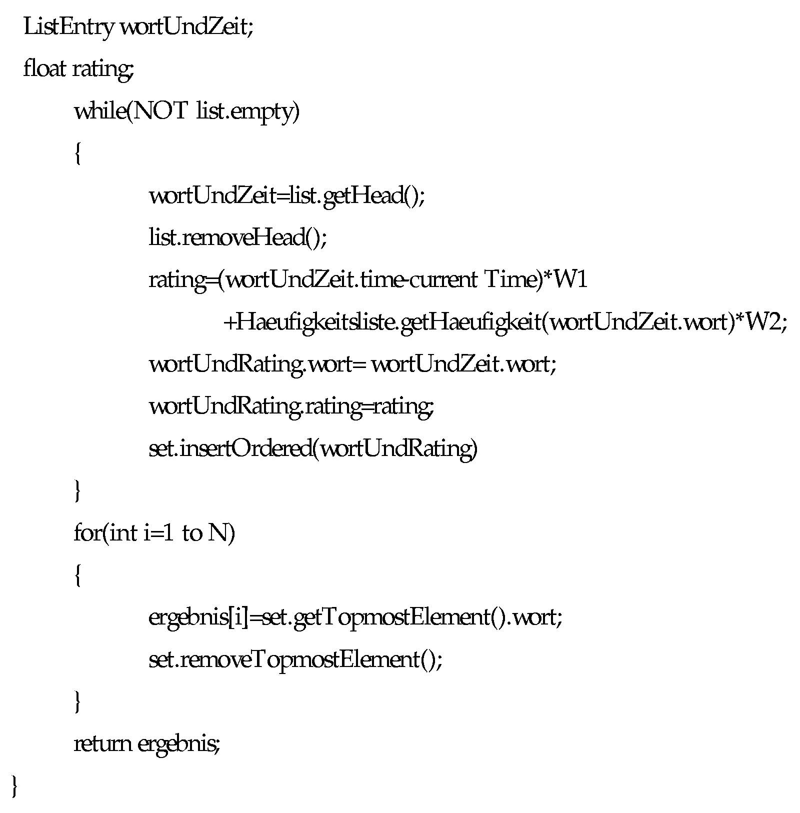

Diese Liste wird nun auf dem Bildschirm angezeigt und dem Benutzer somit Gelegenheit zur Selektion eines Begriffes gegeben (etwa durch die Nummerntasten der Fernbedienung). Sobald der Benutzer seine Auswahl getroffen hat, wird diese durch die Eingabe 15 der Abfrage 16 nach der Wahl eines Begriffes mitgeteilt. Die Abfrage 16 wird positiv beantwortet, und die zugehörige weiterführende Information (z.B. ein Videodatenstrom oder ein Text) durch die Erläuterungsanzeige 17 vom Erläuterungsspeicher 18 geholt und auf dem Bildschirm 7 angezeigt.

Im folgenden werden mehrere Anwendungsszenarios des erfindungsgemäßen Multimedia-Gerätes kurz erläutert.

Bei einer Hörfunkübertragung eines Fußballspiels am Multimedia-Gerät kann der Benutzer zu den durch Spracherkennung erkannten Spielernamen Bilder der Spieler und/oder dessen Lebensläufe auf einer Ausgabeeinheit des Multimedia-Gerätes 1 aus einer entsprechenden Informationsquelle anfordern.

Der Erkenner 8 betreibt in diesem Fall Spracherkennung. Beim Erläuterungsspeicher 18 handelt es sich entweder um eine (beispielsweise mit einer Sportzeitschrift) mitgelieferten CD oder um auf einer oder mehreren Websites (etwa der Fußballvereine) abgelegte Daten über die ein Index erstellt und auf dem Speicher abgelegt wurde. Der Begriffsfilter 10 wird nur im Index enthaltene Begriffe in die FIFO-Liste aufnehmen. Die Anforderung weiterführender Informationen (Anfrage 12) erfolgt etwa wie im ausführlichen Beispiel der Fig 1 angegeben über einen zusätzlich vorhandenen Bildschirm, kann aber auch durch Spracherkennung und -synthese auf die Ein-/Ausgabemöglichkeiten des HiFi-Geräts beschränkt bleiben.

Eine besonders sinnvolle Anwendung des Multimedia-Gerätes 1 findet der Benutzer während des Verfolgens einer beliebigen Sendung in fremder Sprache. Mit einem als Informationsquelle dienenden DVD-Wörterbuch wird dem Benutzer die Möglichkeit gegeben, zu nicht bekannten Worten der fremden Sprache eine Übersetzung anzufordern.

Die Verarbeitungsschritte erfolgen hierbei wie im ausführlichen Beispiel angegeben. Der Vorfilter 9 wird jedoch eine auf der DVD, die dem Erläuterungsspeicher 18 entspricht, enthaltene Liste erhalten müssen (in Fig 2 Flußdiagramm), da er an eine andere Sprache angepasst werden muss. Wird die DVD zusammen mit einem Sprachlehrgang geliefert, so wird der Begriffsfilter 10 weniger aufgrund einer allgemeinen Häufigkeitsverteilung der Begriffe vorgehen, sondern vielmehr diejenigen Worte in die Liste eintragen, die der Benutzer im bisherigen Lehrgang noch nicht oder erst kürzlich gelernt hat.

Ein Benutzer, welcher durch eine Bildungssendung ein Fernstudium praktiziert, kann mit einem zur Bildungssendung passenden auf einer DVD gespeichertem Fachbuch den Lernstoff durch parallele Informationen (Bildungssendung und ergänzendes Fachbuch) auf eine effektive Weise begreifen.

Die einzelnen Verarbeitungsschritte erfolgen wiederum wie angegeben, ggf. kann der Begriffsfilter 9 wie im vorherigen Beispiel durch den Lernfortschritt des Benutzers parametrisiert werden.

Ein Anbieter von Aktieninformationen im Internet stellt dem Benutzer ein optisches Zeichenerkennungsverfahren (OCR) zur Verfügung, welches dem Benutzer während einer Sendung erlaubt, Begriffe eines aus Worten und Abkürzungen bestehenden auf dem Bildschirm laufenden Laufbands zu detektieren, so dass aktuelle Informationen zu den Inhalten (Börsenkurse) des Laufbandes im Internet abgerufen werden können.

Die Möglichkeit einen Benutzer auf eine preiswerte Art Information über Aktienkurse zukommen zu lassen, bietet gleichzeitig umfangreiche Hintergrundinformation zu Aktien, Unternehmen etc. Die Erkennung erfolgt durch OCR auf einen begrenzten Bereich des Bildschirms. Sofern ein durch den Erkenner 8 zu bearbeitender Bereich ausreichend auf das Tickerband eingeschränkt werden kann, ist ein Vorfilter unnötig Sollte der Informationsanbieter zudem sicher sein, zu allen im Laufband erscheinenden Kürzeln weiterführende Information zu besitzen, kann auch der Begriffsfilter 10 entfallen. In diesem Fall ist der Erläuterungsspeicher 18 eine Website des Informationsanbieter und die Erläuterungsanzeige 17 wird die weiterführende Information erst auf Anfrage des Benutzers von dort abrufen.

Ein Hersteller bietet ein Datenpaket zB. in Form einer Compact Disk (CD) dem Benutzer an. Der Benutzer kann während einer Verkaufssendung eines Konkurrenten am Multimedia-Gerät sich zu allen auf dem Bildschirm des Multimedia-Gerätes eingeblendeten Produktnamen durch eine gestartete Anfrage am Multimedia-Gerät über die auf der CD gespeicherten Produktangebote des Herstellers als Vergleich zu der Verkaufssendung informieren lassen.

Hierbei befinden sich auf der CD Produktinformationen sowie ein Index der vorhandenen Produkte, deshalb findet eine Filterung nach einer besonderen Häufigkeitsliste nicht statt. Der Begriffsfilter selektiert lediglich alle auf der CD vorhandenen Begriffe zur Speicherung in der FIFO -Liste. Ggf. wird die Entgegennahme von Benutzereingaben unterdrückt (Anfrage 12) und Informationen werden automatisch angezeigt, wenn ein Konkurrenzprodukt erwähnt wird

## Patentansprüche

1. Multimedia-Gerät zur Erkennung wenigsten eines Informationselementes in einem vom Multimedia-Gerät verarbeiteten Audio- und/oder Videodatenstrom,
- mit wenigstens einem Speicher zur Abspeicherung der erkannten Informationselemente in Abhängigkeit von einer aus Auftrittszeitpunkt eines Informationselementes und wenigstens einem Selektionskriterium bestehenden Gewichtung,
- mit einer Ausgabeeinheit zur Darstellung weiterführender Informationen zu dem durch einen Benutzer ausgewählten Informationselement des Multimedia-Gerätes.

2. Multimedia-Gerät nach Anspruch 1
**dadurch gekennzeichnet,**
**dass** eine erste Liste (3) der in Audio- und/oder Videodatenstrom erkannten Informationselemente und eine zweite Liste (4) der Informationselemente, zu denen weiterführende Informationen vorhanden sind, erstellt werden und miteinander abgeglichen werden.

3. Multimedia-Gerät nach Anspruch 2
**dadurch gekennzeichnet,**
**dass** die erste Liste (3) Informationselemente beinhaltet, deren Auftrittswahrscheinlichkeit kleiner ist als ein zuvor angegebener Grenzwert und deren Auftrittszeitpunkt im Audio- und/oder Videodatenstrom festgehalten wird.

4. Multimedia-Gerät nach Anspruch 1
**dadurch gekennzeichnet,**
**dass** wenigstens eine Informationsquelle (2) nach weiterführenden Informationen durchsucht wird, und
**dass**, falls keine weiterführenden Informationen in einer ersten Informationsquell gefunden wurden, eine weitere Informationsquelle durchsucht wird.

5. Multimedia-Gerät nach Anspruch 4
**dadurch gekennzeichnet,**
**dass** die weiterführenden Informationen in Anhängigkeit der Informationsquelle dem Benutzer präsentiert werden.

6. Verfahren zur Darstellung weiterführender Informationen bei dem
- wenigstens ein Informationselement in einem vom Multimedia-Gerät verarbeiteten Audio- und/oder Videodatenstrom erkannt wird,
- das erkannte Informationselement in Abhängigkeit von einer aus Auftrittszeitpunkt eines Informationselementes und wenigstens einem Selektionskriterium bestehenden Gewichtung abgespeichert wird, und
- weiterführender Informationen zu dem durch einen Benutzer ausgewählten Informationselement auf einer Ausgabeeinheit des Multimedia-Gerätes präsentiert werden

7. Netzwerk mit wenigstens einem Multimediagerät zur Erkennung wenigstens eines Informationselementes in einem vom Multimedia-Gerät verarbeiteten Audio- und/oder Videodatenstrom,
- mit wenigstens einem Speicher zur Abspeicherung der erkannten Informationselemente in Abhängigkeit von einer aus Auftrittszeitpunkt eines Informationselementes und wenigstens einem Selektionskriterium bestehenden Gewichtung,
- mit einer Ausgabeeinheit zur Darstellung weiterführender Informationen zu dem durch einen Benutzer ausgewählten Informationselement des Multimedia-Gerätes.
